# EUROPEAN PATENT APPLICATION

(11) **EP 1 903 349 A1**
(43) Date of publication of application: **26.03.2008**
(21) Application number: 07005553.8
(22) Date of filing: 19.03.2007
(51) Int. Cl.: G01S 5/02, G01S 5/14

(54) **Mobile communication terminal for receiving position information service and method thereof**

(30) Priority: 25.09.2006 KR 20060092752
(71) Applicant: Samsung Electronics Co., Ltd., Yeongtong-gu Suwon-si, Gyeonggi-do (KR)
(72) Inventor: Joo, Jae Seok, Gyeonggi-do (KR)
(74) Representative: Boakes, Jason Carrington

(57) **Abstract**

A mobile communication terminal for receiving position information by using a mobile communication network in a satellite shaded area and a method thereof. The mobile communication terminal includes a channel receiver for receiving location information of a linked base station and for receiving identification and position information of adjacent base stations while capturing a channel; a signal property detector for measuring strengths and phases of pilot signals received from the adjacent base stations and selecting two adjacent base stations transmitting the two strongest pilot signals; a position calculator for calculating a position of the mobile communication terminal by using the position information of the two selected adjacent base stations and the linked base station; and a control unit for setting the calculated position of the mobile communication terminal to position information of the mobile communication terminal.

## Description

### BACKGROUND OF THE INVENTION

### 1. Field of the Invention

The present invention relates to a mobile communication terminal, and in particular, to a mobile communication terminal for receiving position information by using a mobile communication network in a satellite shaded area, and a method thereof.

### 2. Description of the Prior Art

A mobile communication terminal includes a Personal Digital Assistant (PDA), cellular phone, Personal Communication Service (PCS) phone, hand-held PC, Global System for Mobile (GSM) phone, and notebook computer.

With popularization of the mobile communication terminal, mobile communication terminal users have become to desire various functions. Accordingly, mobile communication terminal manufacturers now provide various services in addition to basic services of the mobile communication terminal.

Particularly, among wireless Internet services using a mobile communication terminal, a Location-Based Service (LBS) has become prominent due to its wide usability and convenience. A location-based wireless Internet service may be used in various fields, such as rescue call, criminal notice, Geographic Information System (GIS) providing regional information on an area adjacent to a base station, graduation of mobile communication fees according to locations, traffic information, car navigation system, logistics control, and location-based Customer Relationship Management (CRM).

In order to utilize the location-based service, detecting a position of a mobile communication terminal is essential. Technology for detecting the position of the mobile communication terminal is called Position Determination Technology (PDT), and includes a network-based system utilizing a signal received from a base station and a handset-based system utilizing a signal from a Global Positioning System(GPS).

The network-based system does not require an additional module to be added to an existing mobile communication terminal, and thereby has an advantage that additional costs may be saved in development of a new mobile communication terminal. However, the network-based system has a disadvantage of less accuracy in position determination, because deviation in the position determination becomes 500 meters to several kilometers according to the cell size of a base station or according to a position determination system. The position determination system utilizing a mobile communication network may be classified into 3 systems: a pilot pseudo noise (PN) system simply identifying whether a mobile communication terminal is located in a service area of a base station; an approximate position determination system utilizing a round trip delay or a pilot phase; and a position determination system using a GPS receiver module installed in a mobile communication terminal and a mobile communication network.

The handset-based system which uses a GPS signal enables position determination everywhere in the world by communicating with 24 GPS satellites revolving in the earth's orbit at an altitude of 20,000 Km. The GPS uses a radio wave of 1.5 GHz band, and a ground control station performs collection and synchronization of information received from GPS satellites. Accordingly, a user may identify the current position by using a GPS receiver. Triangulation is used for the position determination in the GPS system. At least 3 satellites for the triangulation and 1 observation satellite for compensation of time deviation, i.e. in total 4 GPS satellites, are necessary for the position determination. In the GPS system, positions of individual satellites are already known, and the position determination is performed by measuring distances between the satellites and the GPS receiver. The distance between the satellite and the GPS receiver may be identified by calculating the difference between a transmission time of a radio wave from the satellite and a reception time of the radio wave at the GPS receiver, and multiplying the time difference (i.e. radio wave reaching time) by the light velocity.

The handset-based system using a GPS signal is classified into 3 systems of: a mobile terminal (MS)-assisted and network-based GPS (MS-assisted GPS) system, MS-based and network-assisted GPS (MS-Based GPS) system, and standalone GPS system.

The MS-assisted GPS system receives information on satellites detectable at the current position of a mobile communication terminal, measures a pilot PN phase and a GPS pseudo range, and transmits the pilot PN phase and GPS pseudo range to a position determining server. The position determining server calculates a position of the mobile communication terminal from the pilot PN phase and GPS pseudo range, and transmits the position information to the mobile communication terminal. If a sufficient number of satellites are detected, position determination is performed by using signals received from the satellites. If fewer than a sufficient number of satellites are detected, the position determination is performed by using pilot PN phase and signals received from the satellites. If no satellite is detected, the position determination is performed by using an Advanced Forward Link Triangulation (AFLT).

The MS-based GPS system is a system in which a mobile communication terminal itself calculates a position by receiving visible satellite information (almanac data and ephemeris data) available for 30 - 120 minutes from a position determining server, generating AA (Acquisition Assistance) data from the visible satellite information, and detecting satellites. Accordingly, the MS-based GPS system receives visible satellite information from the position determining server only when the visible satellite information must be updated, and itself performs position determination without transmitting longitude and latitude coordinates to the position determining server when the visible satellite information is not required to be updated.

The standalone GPS system is a system in which a mobile communication terminal identifies visible satellites by checking all of the 24 satellites and receives visible satellite information (almanac data and ephemeris data) from the visible satellites. The received visible satellite information is set to an initial value of a position calculation filter (for example, a Kalman filter), and position determination of the mobile communication terminal is performed by using the initial value and position information received from 4 satellites.

However, the handset-based system using a GPS signal has a disadvantage that position determination is impossible in a satellite shaded area where signals cannot be received from at least 4 satellites signal.

### SUMMARY OF THE INVENTION

The present invention has been made in view of the above problems, and an object of the present invention is to provide a position information service method for a mobile communication terminal by using a mobile communication network.

Another object of the present invention is to provide a position information service method for a mobile communication terminal by using a mobile communication network in a satellite shaded area.

Another object of the present invention is to provide a method for setting position information of a mobile communication terminal to an initial position value of a position calculating filter by using a mobile communication network.

In order to achieve the above objects, a mobile communication terminal for receiving position information according to the present invention includes a channel receiver for receiving location information of a linked base station, and for receiving identification and position information of adjacent base stations while capturing a channel; a signal property detector for measuring strengths and phases of pilot signals received from the adjacent base stations and selecting two adjacent base stations transmitting the two strongest pilot signals; a position calculator for calculating a position of the mobile communication terminal by using the position information of the two selected adjacent base stations and the linked base station; and a control unit for setting the calculated position of the mobile communication terminal to position information of the mobile communication terminal.

In order to achieve the above objects, a method for receiving position information of a mobile communication terminal according to the present invention includes receiving location information of a linked base station, and identification and position information of adjacent base stations while capturing a channel; measuring strengths and phases of pilot signals received from the adjacent base stations and selecting two adjacent base stations transmitting the two strongest pilot signals; and calculating a position of the mobile communication terminal by using the position information of the two selected adjacent base stations and the linked base station.

A method for receiving position information of a mobile communication terminal according to the present invention includes receiving location information of a linked base station, and identification and position information of adjacent base stations while capturing a channel; receiving visible satellite information from a position determining server; measuring strengths and phases of pilot signals received from the adjacent base stations and selecting two adjacent base stations transmitting the two strongest pilot signals, if the mobile communication terminal is identified to be located in a satellite shaded area; and calculating a position of the mobile communication terminal by using the position information of the selected two adjacent base stations and the linked base station.

A method for receiving position information of a mobile communication terminal according to the present invention includes receiving location information of a linked base station, and identification and position information of adjacent base stations while capturing a channel; measuring strengths and phases of pilot signals received from the adjacent base stations and selecting two adjacent base stations transmitting the two strongest pilot signals; calculating a position of the mobile communication terminal by using the position information of the selected two adjacent base stations and the linked base station; setting the calculated position of the mobile communication terminal to an initial value of a satellite position; and detecting satellites, that receive receiving visible satellite information from visible satellites, and calculate a position of the mobile communication terminal.

### BRIEF DESCRIPTION OF THE DRAWINGS

The above and other objects, features and advantages of the present invention will become more apparent from the following detailed description in conjunction with the accompanying drawings, in which:
FIG. 1 is a schematic diagram showing a configuration of a position information service system for a mobile communication terminal according to a first embodiment of the present invention;
FIG. 2 is a block diagram showing a configuration of a mobile communication terminal for providing position information according to the first embodiment of the present invention;
FIG. 3 is a schematic diagram showing a configuration of a position information service system for a mobile communication terminal according to another embodiment of the present invention;
FIG. 4 is a block diagram showing a configuration of a mobile communication terminal having a GPS receiver for providing position information according to the second embodiment of the present invention;
FIG. 5 is a flow chart showing a position information service method for a mobile communication terminal according to the first embodiment of the present invention;
FIG. 6 is a flow chart showing a method of calculating a position of the mobile communication terminal as shown in FIG. 5;
FIG. 7 is a flow chart showing a position information service method for a mobile communication terminal according to the second embodiment of the present invention;
FIG. 8 is a flow chart showing a position information service method for a mobile communication terminal according to a third embodiment of the present invention;
FIG. 9 is schematic diagram showing a method of receiving position information from a base station through a mobile communication network; and
FIG. 10 is a schematic diagram showing a method of calculating a position of a mobile communication terminal.

### DETAILED DESCRIPTION OF PREFERRED EMBODIMENTS

A position determination method for a mobile communication terminal according to the present invention may be applied to an IS-95A/B network, CDMA2000 1x EV-DO, EV-DV, and a fourth generation mobile communication network.

A position information service method for a mobile communication terminal according to the present invention may be applied both to synchronous mobile communication systems and to asynchronous mobile communication systems.

The phrase 'Position information of a base station' refers to values of longitude and latitude coordinates defining the position at which a base station is located.

The phrase 'Identification information of a base station' refers to a value for identifying a base station, and each base station has a different value.

The phrase 'Visible satellite information' refers to almanac data and ephemeris data received from a satellite visible from the position of a mobile communication terminal.

The phrase 'Satellite shaded area' refers to an area in which satellite signals including position measurement information are not received from at least 4 visible satellites.

A position determining server (or Positioning Determination Entity (PDE)) according to the present invention performs general control and management of position information of a mobile communication terminal, calculates a position of the mobile communication terminal, and transmits position information to the mobile communication terminal through the wireless Internet. The position determining server receives GPS radio waves from the mobile communication terminal through a base station, determines the longitude and latitude of the mobile communication terminal using the GPS radio waves, and transmits visibility information including a 'provide ephemeris' message to the mobile communication terminal.

Hereinafter, exemplary embodiments of the present invention are described in detail with reference to the accompanying drawings. The same reference numbers are used throughout the drawings to refer to the same or like parts. Detailed descriptions of constructions or processes known in the art may be omitted to avoid obscuring the subject matter of the present invention.

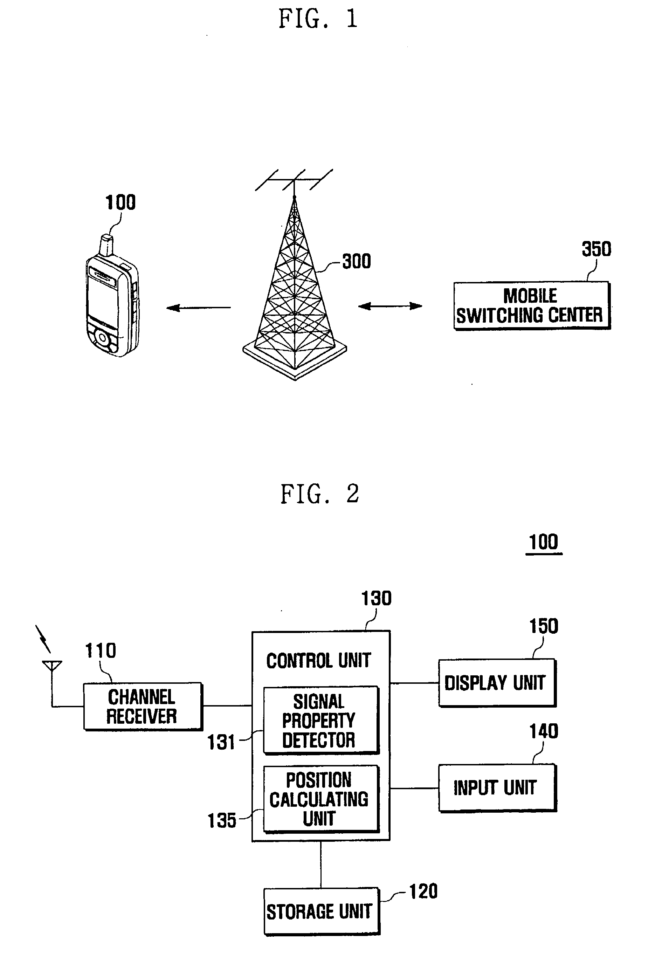

FIG. 1 is a schematic diagram showing a configuration of a position information service system for a mobile communication terminal according to a first embodiment of the present invention.

Here, the position information service system for a mobile communication terminal system is configured with a mobile communication terminal 100, base station 300, and mobile switching center 350. A base station controller for the base station 300 is omitted in the diagram.

The mobile communication terminal 100 detects a channel from the base station 300, and forms a linkage with the base station 300. The linked base station 300 transmits identification and position information of the linked base station 300 and adjacent base stations to the mobile communication terminal 100. The mobile communication terminal 100 selects two (2) adjacent base stations transmitting the 2 strongest pilot signals in addition to the linked base station 300 transmitting a pilot signal. The mobile communication terminal 100 calculates its position by using position information received from the two (2) selected adjacent base stations and the linked base station 300.

FIG. 2 is a block diagram showing a configuration of a mobile communication terminal for providing position information according to the first embodiment of the present invention.

The mobile communication terminal 100 includes a channel receiver 110, storage unit 120, control unit 130, input unit 140, and display unit 150.

In operation, when a channel is captured, the channel receiver 110 receives identification and position information of a linked base station and of adjacent base stations from the linked base station. The channel receiver 110 also includes a synchronous channel receiver for receiving synchronous channel information containing the identification and position information of the adjacent base stations as system parameters. The channel receiver 110 includes a paging channel receiver for receiving paging channel information containing the identification and position information of the adjacent base stations.

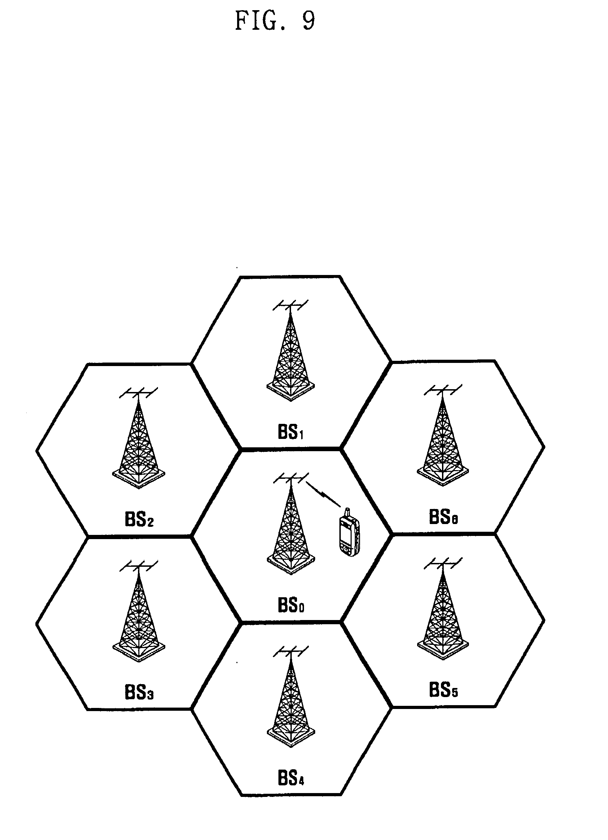

The storage unit 120 stores programs and data required for the control of the mobile communication terminal 100. An Erasable Programmable Read Only Memory (EPROM), Static Random Access Memory (SRAM), and flash memory may be used as the storage unit 120. Additionally, the storage unit 120 stores base station identification and position information received from the channel receiver 110 in a table format. As shown in FIG. 9, the linked base station is identified as BS₀. As shown in Table 1, the storage unit 120 stores position information of the linked base station BS₀, and identification and position information of base stations adjacent to the base station BS₀ received by the channel receiver 110.

**Table 1**

| Base station identification information | Position information |
|---|---|
| BS₀ | 35°73'60"N |
| | 128°01'50"E |
| BS₁ | 34°73'70"N |
| | 128°01'50"E |
| BS₂ | 35°73'65"N |
| | 128°01'40"E |
| BS₃ | 35°73'55"N |
| | 128°01'40"E |
| BS₄ | 34°73'50"N |
| | 128°01'50"E |
| BS₅ | 35°73'55"N |
| | 128°01'60"E |
| BS₆ | 35°73'65"N |
| | 128°01'60"E |

The control unit 130 controls general operation of the mobile communication terminal 100, and may include a microprocessor or a Digital Signal Processor (DSP).

Additionally, the control unit 130 includes a signal property detector 131 for measuring the strength and phase of a pilot signal received from an adjacent base station and a position calculator 135 for calculating a position of the mobile communication terminal 100.

The signal property detector 131 measures the strength and phase of a pilot signal received from a base station corresponding to the base station identification information received from the channel receiver 110. The signal property detector 131, also, selects the two (2) adjacent base stations transmitting the two (2) strongest pilot signals in addition to the linked base station transmitting a pilot signals.

The position calculator 135 calculates the position of the mobile communication terminal 100 by a triangulation method by using two (2) pilot signals received from the adjacent base stations and the position information of the linked base station. With the triangulation method, the position calculator 135 identifies distances between the mobile communication terminal 100 and base stations by using pilot signal phases received from the individual base stations. The distances are calculated by multiplying a difference of the pilot signal phases by the light velocity (300,000,000 m/sec). Accordingly, the position of the mobile communication terminal 100 can be calculated in a triangulation method by using the distances between the mobile communication terminal 100 and the individual base stations.

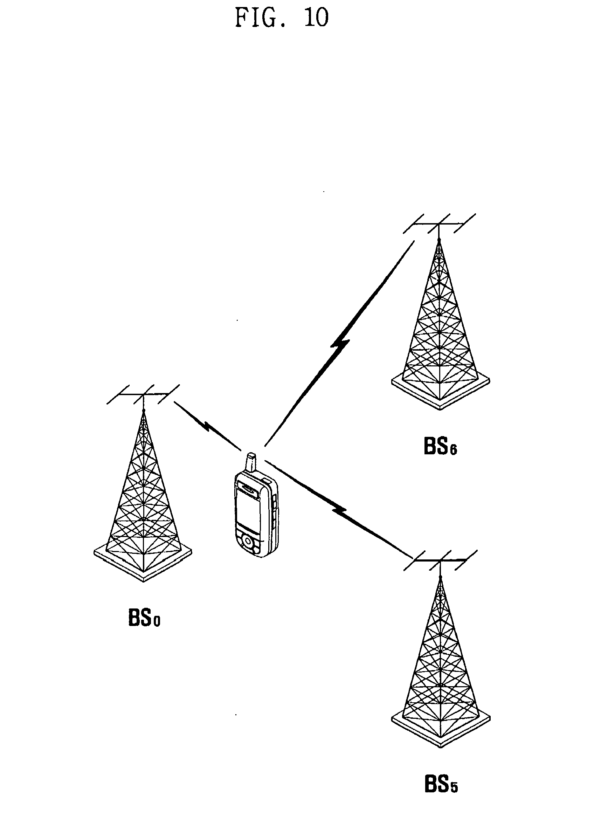

For example, referring to FIG. 10, a linked base station BS₀, and two (2) adjacent base stations BS₅ and BS₆ have been selected. The position calculator 135 calculates the position of the communication terminal 100 by the triangulation method by using the position information of the three (3) base stations.

In more detail, the position of the communication terminal 100 may be calculated in a triangulation method by using x, y, and z axes in a rectangular coordinate system converted from longitude (λ) and latitude (λ) of each base station in a spherical coordinate system. A description of the triangulation method is omitted in this specification, because it is a well-known technology.

Additionally, the control unit 130 sets the position of the mobile communication terminal 100 calculated by the position calculator 135 to position information of the mobile communication terminal 100.

The input unit 140 may be configured with various devices, such as a keypad and a touch screen, and is used as a user interface for transmitting a user input signal to the control unit 130. The input unit 140 outputs a control signal input by the user, and the control signal is transmitted to the control unit 130.

The display unit 150 outputs an operation status of the mobile communication terminal 100. Under the control of the control unit 130, the display unit 150 outputs data input through the input unit 140, or outputs an operation status of the mobile communication terminal 100 and other information with icons and characters. Additionally, the display unit 150 outputs a screen for setting or executing a function requested by the user.

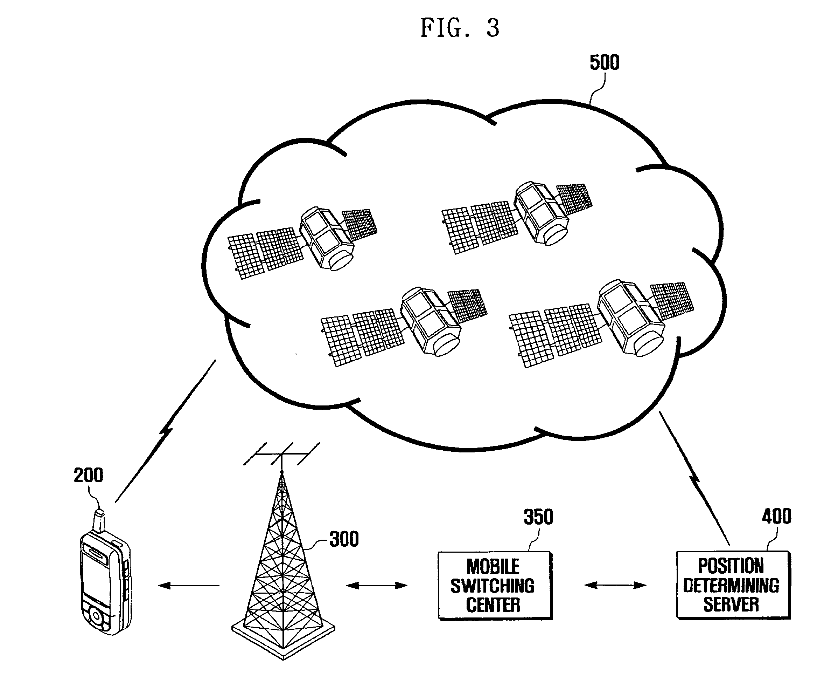

FIG. 3 is a schematic diagram showing a configuration of a position information service system for a mobile communication terminal according to a second embodiment of the present invention.

Here, the mobile communication system is configured with a mobile communication terminal 200, base station system 300, mobile switching center 350, position determining server 400, and visible satellites 500.

If the mobile communication terminal 200 is located in a satellite shaded area, the mobile communication terminal 200 receives identification and position information of the linked base station 300 and of adjacent base stations from the linked base station 300. The mobile communication terminal 200 selects two (2) adjacent base stations transmitting the two (2) strongest pilot signals in addition to the linked base station 300 transmitting a pilot signal. The mobile communication terminal 200 calculates a position of the mobile communication terminal 200 by using the position information received from the two (2) selected adjacent base stations and the linked base station 300.

In the case of an MS-based GPS system, the mobile communication terminal 200 receives visible satellite information from the position determining server (PDE) 400.

In the case of a standalone GPS system, the mobile communication terminal 200 sets the calculated position information of the mobile communication terminal 200 to an initial value of a position calculating filter.

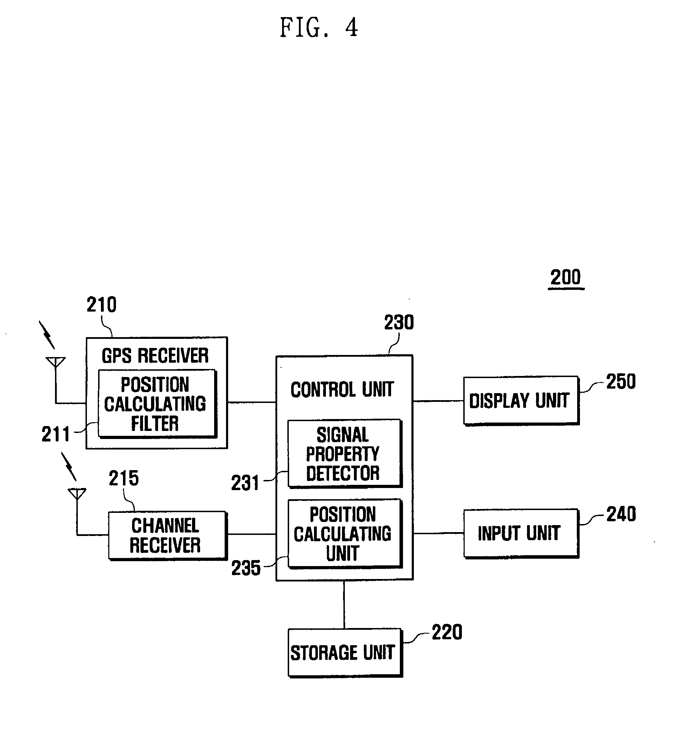

FIG. 4 is a block diagram showing a configuration of a mobile communication terminal 200 having a GPS receiver for providing position information according to the second embodiment of the present invention.

The mobile communication terminal 200 includes a channel receiver 215, GPS receiver 210, storage unit 220, control unit 230, input unit 240, and display unit 250. The mobile communication terminal 200 includes identical components to those of the mobile communication terminal 100 shown in FIG. 2, and therefore detailed descriptions of identical components are omitted.

The GPS receiver 210 may operate in an MS-based system or a standalone system. A GPS receiver 210 using an MS-based system receives visible satellite information from the position determining server 400. The GPS receiver 210 calculates a position of the mobile communication terminal 200 by using the received visible satellite information and satellite measurement information received from at least four (4) satellites. The GPS receiver 210 provides reception status of the satellite measurement information to the control unit 230.

A GPS receiver 210 using a standalone system sets, under the control of the control unit 230, the position of the mobile communication terminal 200 calculated by a position calculator 235 to an initial value of a position calculating filter 211.

The storage unit 220 has a similar function to the storage unit 120 shown in FIG. 2. In the case of the GPS receiver 210 using an MS-based system, the storage unit 220 stores the visible satellite information received from the position determining server 400 through the channel receiver 215. In the case of the GPS receiver 210 using a standalone system, the storage unit 220 stores the visible satellite information received from the visible satellites 500 through the GPS receiver 210. Additionally, the storage unit 220 stores the position of the mobile communication terminal 200 calculated by the position calculator 235.

The control unit 230 controls general operation of the mobile communication terminal 200, and may include a microprocessor or a digital signal processor (DSP).

Additionally, the control unit 230 includes a signal property detector 231 and a position calculator 235. The signal property detector 231 has a similar function to the signal property detector 131 shown in FIG. 2, and therefore detailed description of the signal property detector 231 is omitted.

In operation, control unit 230 determines, by analyzing satellite signals received from the GPS receiver 220, whether the mobile communication terminal 200 is currently in a satellite shaded area. If the mobile terminal 200 is in a satellite shaded area, the control unit 230 controls the position calculator 235 to calculate the position of the mobile communication terminal 200 by using position information of three (3) base stations. The position calculator 235 has a similar function to the position calculator 135 shown in FIG. 2, and therefore detailed description of the position calculator 235 is omitted.

The control unit 230 sets the position of the mobile communication terminal 200 calculated by the position calculator 235 to position information of the mobile communication terminal 100. In the case of the GPS receiver 210 using a standalone system, the control unit 230 sets the calculated position of the mobile communication terminal 200 to an initial value of the position calculating filter 211, and thereby converging speed of the position calculating filter 211 is improved.

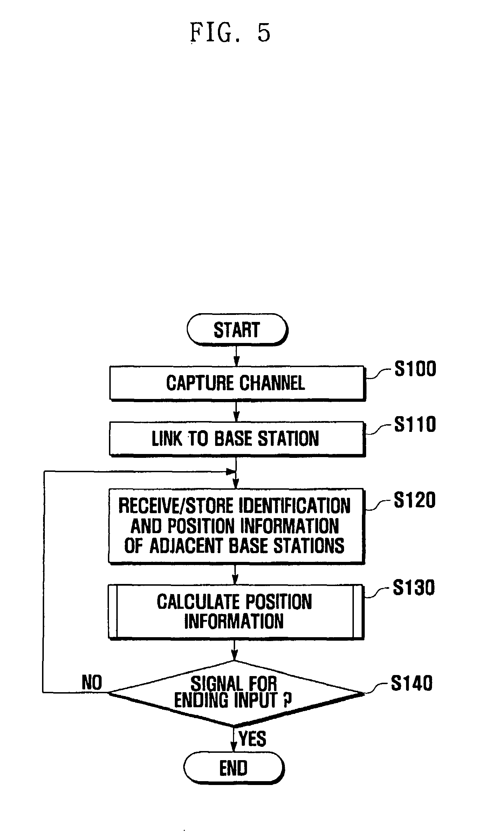

FIG. 5 is a flow chart showing a position information service method for a mobile communication terminal according to the first embodiment of the present invention.

In FIGS. 2 and 5, the control unit 130 controls the channel receiver 110 to capture a channel in step S100, to link to a base station in step S110, and to receive identification and position information of the linked base station and adjacent base stations in step S120. The channel receiver 110 includes a synchronous channel receiver for receiving synchronous channel information containing the identification and position information of the adjacent base stations as system parameters. Additionally, the channel receiver 110 includes a paging channel receiver for receiving paging channel information containing the identification and position information of the adjacent base stations.

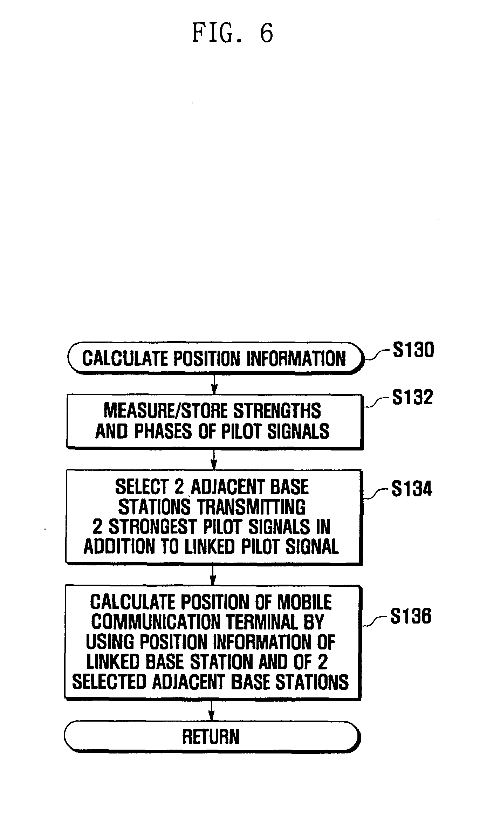

Next, in step 130, the control unit 130 calculates a position of the mobile communication terminal 100 by using the identification and position information of the linked base station 300 and of the adjacent base stations received in step S120. Position calculating steps of the mobile communication terminal 100 are described later in more detail with reference to FIG. 6.

The control unit 130 then identifies whether an ending signal is input in step S140. If an ending signal is not input, the process goes to step S120.

FIG. 6 is a flow chart showing steps of calculating a position of the mobile communication terminal in the method of FIG. 5. In FIG. 6, the linked base station is denoted as BS₀, and the adjacent base stations are denoted as BS₁ to BS₆. A letter 'n' is a variable for identifying a base station.

In FIGS. 2 and 6, the control unit 130 controls the signal property detector 131 to sequentially measure and store strengths and phases of pilot signals transmitted from six (6) adjacent base stations(BS₁ to BS₆) in stepS132. The signal property detector 131 selects two (2) adjacent base stations transmitting the two (2) strongest pilot signals in addition to the linked base station BS₀ transmitting a pilot signal in step S134. The position calculator 135 calculates the position of the mobile communication terminal 100 by using the position information of the linked base station BS₀ and of the two (2) selected adjacent base stations in step S136. A position calculation method for a mobile communication terminal 100 was previously described with reference to FIG. 2, and therefore is omitted here.

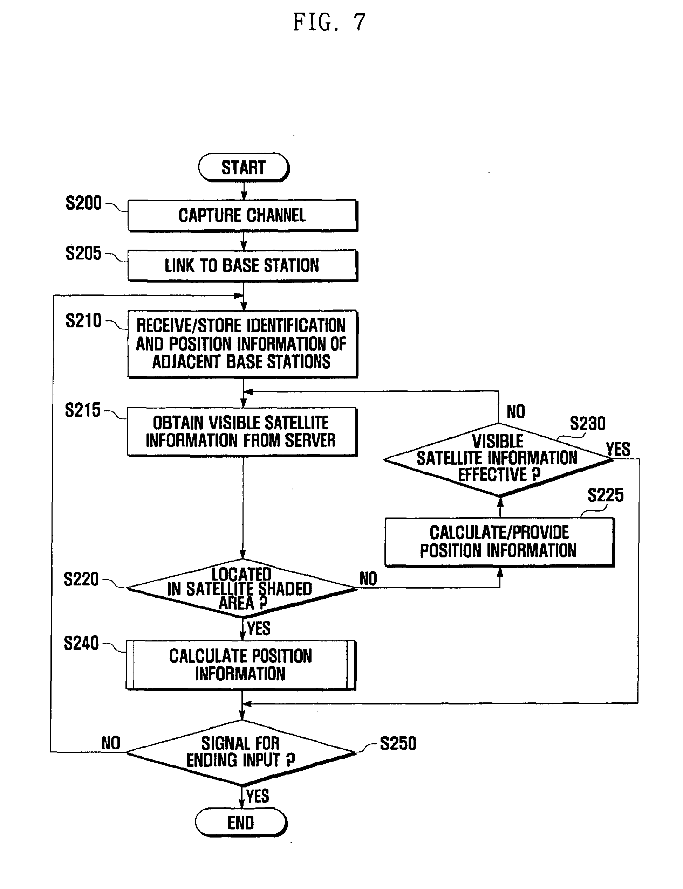

FIG. 7 is a flow chart showing a position information service method for a mobile communication terminal according to the second embodiment of the present invention. FIG. 7 also shows an example of a GPS receiver 210 using an MS-based system.

Referring to FIGS. 4 and 7, the control unit 230 controls the channel receiver 215 to capture a channel in step S200, to link to a base station in step S205, and to receive identification and position information of the linked base station and adjacent base stations in step S210. The channel receiver 215 includes a synchronous channel receiver for receiving synchronous channel information containing identification and position information of the adjacent base stations as system parameters. Additionally, the channel receiver 215 includes a paging channel receiver for receiving paging channel information containing identification and position information of the adjacent base stations.

The control unit 230 controls the GPS receiver 210 to receive visible satellite information from the position determining server 400 in step S215. The control unit 230 identifies, by using a satellite signals received from the GPS receiver 210, whether the mobile communication terminal 200 is located in a satellite shaded area in step S220. If the mobile communication terminal 200 is not located in a satellite shaded area , the control unit 230 controls the GPS receiver 210 to calculate a position of the mobile communication terminal 200 by using the visible satellite information received from the position determining server 400 and satellite measurement information received from four (4) visible satellites 500 in step S225. If the visible satellite information received in step S215 is not effective in step S230, the control unit 230 controls the GPS receiver 210 to further receive visible satellite information from the position determining server 400 by returning to step S215.

If the mobile communication terminal 200 is identified to be located in a satellite shaded area in step S220, the control unit 230 calculates a position of the mobile communication terminal 200 by using the identification and position information of the linked base station and adjacent base stations received in step S210 and phases of pilot signals received from three (3) base stations in step S240. Details of step S240 were previously described in FIG. 6, and therefore are omitted here.

The control unit 230 identifies whether an ending signal is input in step S250. If an ending signal is not input, the process returns to step S210.

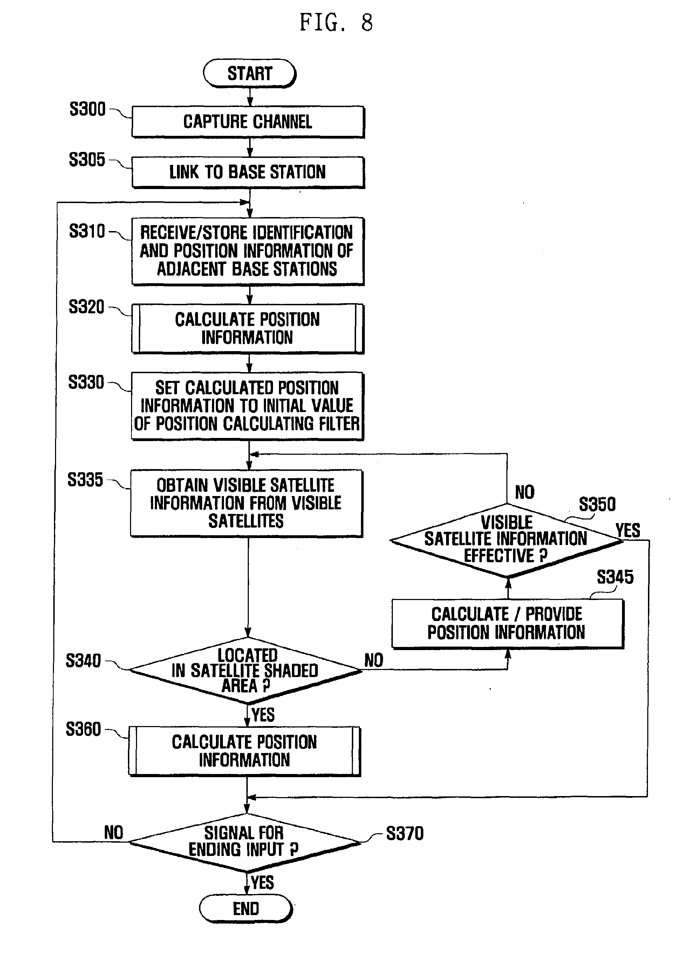

FIG. 8 is a flow chart showing a position information service method for a mobile communication terminal according to a third embodiment of the present invention. FIG. 8 shows an example of a GPS receiver using a standalone system.

Referring to FIGS. 4 and 8, the control unit 230 controls the channel receiver 215 to capture a channel in step S300, to link to a base station in step S305, and to receive identification and position information of the linked base station and adjacent base stations in step S310. The channel receiver 215 includes a synchronous channel receiver for receiving synchronous channel information containing identification and position information of the adjacent base stations as system parameters. Additionally, the channel receiver 215 includes a paging channel receiver for receiving paging channel information containing identification and position information of the adjacent base station.

In step 320 the control unit 230 calculates a position of the mobile communication terminal 200 by using the identification and position information of the linked base station and adjacent base stations received in step S310. Details of step S320 were previously described in FIG. 6, and therefore are omitted here.

The control unit 230 sets the position of the mobile communication terminal 200 calculated in step 320 to an initial value of the position calculating filter 211, and thereby converging speed of the position calculating filter 211 is improved.

The control unit 230 controls the GPS receiver 210 to detect visible satellites from all 24 satellites, and to receive visible satellite information from the detected visible satellites in step S335. The control unit 230 identifies, by using satellite signals received from the GPS receiver 210, whether the mobile communication terminal 200 is located in a satellite shaded area in step S340.

If the mobile communication terminal 200 is not located in a satellite shaded area , the control unit 230 controls the GPS receiver 220 to calculate a position of the mobile communication terminal 200 by using the visible satellite information and satellite measurement information received from at least four (4) visible satellites 500 in step S345. If the visible satellite information received in step S335 is not effective in step S350, the control unit 230 controls the GPS receiver 210 to further receive visible satellite information from visible satellites 500 by returning to step S335.

If the mobile communication terminal 200 is identified to be located in a satellite shaded area in step S340, the control unit 230 calculates a position of the mobile communication terminal 200 by using the identification and position information of the linked base station and adjacent base stations received in step S320 and phases of pilot signals of three (3) base stations in step S360. Details of step S360 were previously described in FIG. 6, and therefore are omitted here.

The control unit 230 identifies whether an ending signal is input in step S370. If an ending signal is not input, the process returns to step S310.

According to the present invention, an accurate position of a mobile communication terminal 200 may be calculated in a triangulation method by using position information of three (3) base stations in a mobile communication network. If a mobile communication terminal 200 having a GPS receiver module is located in a satellite shaded area, position information of the mobile communication terminal 200 may be provided by using position information of three (3) base stations in a mobile communication network, and thereby the position information may be provided without interruption.

Additionally, a position of a mobile communication terminal 200 is calculated in a triangulation method by using position information received from three (3) base stations in a mobile communication network and is set to an initial value of a position calculation filter, and thereby converging speed of the position calculation filter is improved.

Although exemplary embodiments of the present invention have been described in detail hereinabove, it should be understood that many variations and modifications of the basic inventive concept herein described, which may appear to those skilled in the art, will still fall within the spirit and scope of the exemplary embodiments of the present invention as defined in the appended claims.

## Claims

1. A mobile communication terminal for receiving position information, comprising:
a channel receiver for receiving identification and position information of adjacent base station from a linked base station while capturing a channel;
a signal property detector for measuring strengths and phases of pilot signals received from the adjacent base stations and selecting two adjacent base stations transmitting the two strongest pilot signals;
a position calculator for calculating a position of the mobile communication terminal by using the position information of the two selected adjacent base stations and the linked base station; and
a control unit for setting the calculated position of the mobile communication terminal to position information of the mobile communication terminal.

2. The mobile terminal of claim 1, wherein the channel receiver comprises a synchronous channel receiver for receiving synchronous channel information containing the identification and position information of the adjacent base stations as system parameters.

3. The mobile terminal of claim 1, wherein the channel receiver comprises a paging channel receiver for receiving the identification information of the adjacent base stations and paging channel information containing position information.

4. The mobile terminal of claim 1, wherein the base station position information includes longitude and latitude of the base station.

5. A method for receiving position information of a mobile communication terminal, comprising:
receiving location information of a linked base station, and identification and position information of adjacent base stations while capturing a channel;
measuring strengths and phases of pilot signals received from the adjacent base stations and selecting two adjacent base stations transmitting the two strongest pilot signals; and
calculating a position of the mobile communication terminal by using the position information of the two selected adjacent base stations and the linked base station.

6. The method of claim 5, wherein, in receiving identification and position information of adjacent base stations, synchronous channel information containing the identification and position information of the adjacent base stations is received as system parameters.

7. The method of claim 5, wherein, in receiving identification and position information of the adjacent base stations, paging channel information containing identification and position information of the adjacent base stations is received.

8. The method of claim 5, wherein the base station position information includes longitude and latitude of the base station.

9. A method for receiving position information of a mobile communication terminal receiving satellite signals, the method comprising:
receiving location information of a linked base station, and identification and position information of adjacent base stations while capturing a channel;
receiving visible satellite information from a position determining server;
measuring strengths and phases of pilot signals received from the adjacent base stations and selecting two adjacent base stations transmitting the two strongest pilot signals, if the mobile communication terminal is identified to be located in a satellite shaded area; and
calculating a position of the mobile communication terminal by using the position information of the selected two adjacent base stations and the linked base station.

10. A method for receiving position information of a mobile communication terminal receiving satellite signals, comprising:
receiving location information of a linked base station, and identification and position information of adjacent base stations while capturing a channel;
measuring strengths and phases of pilot signals received from the adjacent base stations and selecting two adjacent base stations transmitting the two strongest pilot signals;
calculating a position of the mobile communication terminal by using the position information of the selected two adjacent base stations and the linked base station;
setting the calculated position of the mobile communication terminal to an initial value of a satellite position; and
detecting satellites, receiving visible satellite information from visible satellites, and calculating a position of the mobile communication terminal.

11. The method of claim 10, further comprising, if the mobile communication terminal is identified to be located in a satellite shaded area, calculating the position of the mobile communication terminal by using the position information of the selected two adjacent base stations and the linked base station.
